Europäisches Patentamt

European Patent Office

Office européen des brevets

(11) Veröffentlichungsnummer: **0 243 736**
**A1**

## (12) EUROPÄISCHE PATENTANMELDUNG

(21) Anmeldenummer: 87105104.1

(22) Anmeldetag: 07.04.87

(51) Int. Cl.4: **F26B 17/10 , B01J 8/44**

(30) Priorität: 19.04.86 DE 3613362

(43) Veröffentlichungstag der Anmeldung:
**04.11.87 Patentblatt 87/45**

(84) Benannte Vertragsstaaten:
**AT BE CH DE ES FR GB IT LI NL SE**

(71) Anmelder: **H. ORTH GmbH**
**Werner-von-Siemens-Strasse 7**
**D-6720 Speyer am Rhein(DE)**

(72) Erfinder: **Brunner, Rainer**
**Am Wasserturn 76**
**D-6737 Böhl-Iggelheim 2(DE)**

(74) Vertreter: **Jochem, Bernd, Dipl.-Wirtsch.-Ing.**
**Patentanwälte Beyer & Jochem Postfach 17**
**01 45**
**D-6000 Frankfurt/Main(DE)**

(54) **Flugschichttrockner.**

(57) Der Flugschichttrockner mit Schleuderrad und einem gelochten Anströmboden dient zur Trocknung von klebrigen, wärmeempfindlichen Produkten. Um Anhaftungen des zu trocknenden Guts auf dem Anströmboden und an den Seitenwänden zu verhindern, ist der Anströmboden in wenigstens zwei Felder unterteilt, deren Lochungen dem aufwärts strömenden Trocknungsgas unterschiedliche horizontale Richtungskomponenten geben.

EP 0 243 736 A1

## Flugschichttrockner

Die Erfindung betrifft einen Flugschichttrockner mit Schleuderrad und einem gelochten Anströmboden zur Trocknung von klebrigen, wärmeempfindlichen Produkten.

Ein derartiger Flugschichttrocker findet z.B. Anwendung bei Verfahren gemäß DE-OS 35 19 750, also beispielsweise bei der Trocknung von Kasein, Lactose, Hefe, Kleie, Natriumsulfat und anderen im feuchten Anfangszustand klebrigen und klumpenden, aber wärmeempfindlichen Produkten. Die zur Durchführung des Verfahrens benutzte Vorrichtung besteht aus der Kombination eines Flugschichttrockners - auch als Flugtrockner oder Turbo-Flyer-Trockner bezeichnet - mit einem nachgeschalteten Fließbett-Trockner. Im Flugschichttrockner werden die Produkte bis zum klumpenfreien, fluidisierbaren Zustand vorgetrocknet, so daß danach die Trocknungseigenschaften des Fließbett-Trockners optimal zur Wirkung gebracht werden können.

Es hat sich nun gezeigt, daß die Behandlung solcher kritischer Produkte, wie der oben genannten, in den bisher zur Verfügung stehenden Flugschichttrocknern noch nicht komplikationslos abläuft. Während des Betriebs bauen sich wulstartige Anhaftungen an den Wänden in Höhe des Schleuderrades auf, und auch auf der Lockplatte bilden sich durch Kornwachstum Agglomerate, wobei Krater entstehen. Diese Ablagerungen ließen sich bisher auch nicht durch Veränderung der variablen Betriebsbedingungen, nämlich des Durchsatzes, der Drehzahl des Schleuderrades, der Temperatur von der Strömungsgeschwindigkeit des in senkrechter Richtung von unten nach oben durch die Löcher im Boden strömenden, das zu trocknende Gut mitreißenden Gases beherrschen.

Der Erfindung liegt daher die Aufgabe zugrunde, einen Flugschichttrockner der eingangs genannten Art zu schaffen, bei dem die geschilderten Mängel vermieden und der vollständige pneumatische Abtransport des Trocknungsguts sichergestellt werden können.

Vorstehende Aufgabe wird erfindungsgemäß dadurch gelöst, daß der Anströmboden in wenigstens zwei Felder unterteilt ist, deren Lochungen dem aufwärts strömenden Trocknungsgas unterschiedliche horizontale Richtungskomponenten geben.

Horizontale Anströmböden, deren Löcher dem Gasstrom eine Richtung schräg nach aufwärts geben, sind als sog. Schlitzlochböden für sich bekannt und z. B. unter dem Handelsnamen Conidur von der Firma Hein Lehmann, Düsseldorf, erhältlich. Sie werde u. a. in Fließbett-Trocknern verwendet, um das fluidisierte Trocknungsgut in Förderrichtung horizontal durch den Trockner zu transportieren. Zur Verwendung in Flugschichttrocknern erscheinen sie jedoch zunächst ungeeignet, weil durch die schräge Ausrichtung der Löcher die vertikale Richtungskomponente im Ausmaß der horizontalen Richtungskomponente geschwächt wird, d. h. für den im Flugschichttrockner angestrebten vollständigen pneumatischen Abtransport in vertikaler Richtung nur eine verringerte Strömungskraft zur Verfügung steht. Hinzu kommt, daß sämtliche Löcher der bekannten Schlitzlochböden gleichmäßig einseitig aus gerichtet sind. Sie müßten also auf der einen Seite des Flugschichttrockners zu besonders starken Anhaftungen und Agglomerationen führen.

Überraschenderweise hat sich jedoch herausgestellt, daß die erwähnten Mängel nicht auftreten, wenn der Anströmboden in Felder bzw. Segmente oder Sektoren unterteilt ist, deren Löcher den Gasstrom mit unterschiedlichen horizontalen Richtungskomponenten schräg nach oben leiten. Auf diese Weise wird erreicht, daß eine horizontale Strömungskomponente das Anhaften des Gutes am Anströmboden und der Seitenwand verhindert, ohne daß sich die gleichmäßig einseitige Ausrichtung der Löcher im Schlitzlochboden negativ auswirken kann.

Unterschiedliche horizontale Richtungskomponenten der schräg angeordneten Löcher im Anströmboden haben normalerweise eine rotierende Strömung des Trocknungsgases und des mitgerissenen Trocknungsgutes zur Folge. Teilt man in einer ersten bevorzugten praktischen Ausführung den Anströmboden in mehrere sektorförmige Felder ein, deren Lochungen der Gasströmung jeweils eine mit Bezug auf die Schleuderradachse in gleicher Umfangsrichtung tangentiale, horizontale Richtungskomponente geben, so erhält man eine besonders kräftige Rotationsbewegung, wenn die Umfangsrichtung mit der Drehrichtung des Schleuderrades übereinstimmt. Ist andererseits die Umfangsrichtung der horizontalen Strömungskomponenten der Gasströmung durch die Sektoren des Anströmbodens entgegengesetzt zur Drehrichtung des Schleuderrades, kann im Einzelfall deren Dispergierwirkung verbessert werden.

Wenn der Reinigungseffekt der von jedem Loch aus flach über den Anströmboden streichenden Gasströme ausgenutzt, aber eine insgesamt rotierende, aufsteigende Strömung nach Möglichkeit vermieden oder eingeschränkt werden soll, können auch benachbarte Sektoren des Anströmbodens das Gas in entgegengesetzter Umfangs richtung tangential ausblasen. Alternativ besteht die Möglichkeit, die mittlere horizontale Anströmrichtung der Sektoren radial einwärts oder auswärts auszurichten.

Die für Anströmboden in Frage kommenden gelochten Bleche sind verhältnismäßig dünn. Es empfiehlt sich daher, sie auf eine stützende Tragkonstruktion, bestehend z. B. aus Stahlprofilen, aufzulegen oder damit zu verschweißen. Vorzugsweise werden die jeweils entsprechend der gewünschten Strömungsrichtung aus einem größeren Schlitzlochblech ausgeschnittenen Sektoren mit ungelochten Rändern versehen und diese miteinander sowie mit den Streben der Tragkonstruktion verschweißt. Auf diese Weise lassen sich Ritzen und Spalte vermeiden, in denen sich in Produktablagerungen - schädliche Keime halten und vermehren könnten.

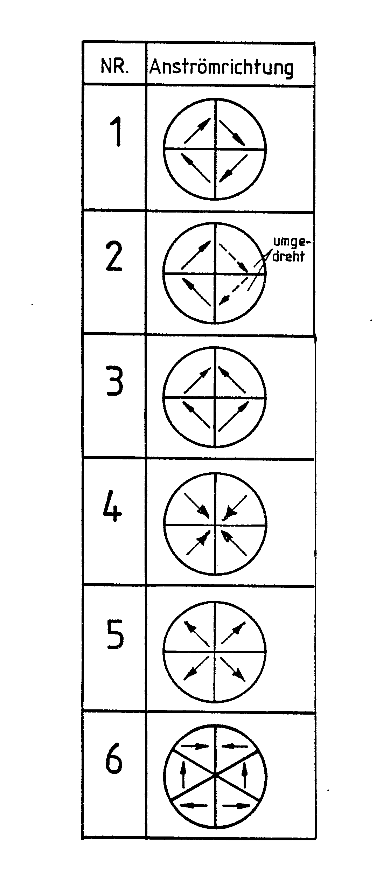

Die Erfindung wird nachstehend anhand der Zeichnung näher erläutert. Diese zeigt in schematischer Darstellung Draufsichten auf 6 verschiedene sektorförmig unterteilte Anströmböden. Dabei ist aus Gründen der zeichnerischen Vereinfachung die Lochung der Anströmböden nicht dargestellt. Es wird jedoch in jedem Sektor der Anströmböden durch einen Pfeil die horizontale Richtungskomponente des durch die schrägen Löcher in dem jeweiligen Sektor unter einem Winkel zur Senkrechten strömenden Trocknungsgases angezeigt.

Bei dem Beispiel Nr. 1 ist der Anströmboden in vier Sektoren unterteilt, deren Lochung so ausgeführt ist, daß die horizontalen Richtungskomponenten der Gasströmung in derselben Umfangsrichtung, hier im Uhrzeigersinn, tangential zur senkrechten Mittelachse, d. h. zur Drehachse des Schleuderrades des Flugschichttrockners, liegen. Wenn das Schleuderrad in Draufsicht ebenfalls im Uhrzeigersinn rotiert, ergibt sich eine kräftige Zirkulation des im Trockner aufsteigenden Gasstroms und des mitgerissenen Trocknungsgutes.

Vorzugsweise wird hierbei die Abströmöffnung des Flugschichttrockners gerade über derjenigen Stelle angeordnet, wo durch die entgegengesetzten Luftströmungen das Gut konzentriert wird.

Bei dem ausführungsbeispiel Nr. 2 sind zwei der sektorförmigen Bleche der Ausführung nach Beispiel Nr. 1 umgekehrt, d. h. mit der Oberseite nach unten montiert worden. Dadurch ergibt sich im Verhältnis zum Beispiel Nr. 1 bei diesen umgewendeten Sektoren eine Umkehr der Umfangsrichtung der tangential ausgerichteten horizontalen Strömungskomponente. Nunmehr lenken ebenso wie bei dem Beispiel Nr. 3 die Löcher in zwei Sektoren den Gasstrom in die eine Umfangsrichtung, während die Löcher in den beiden anderen Sektoren horizontale Richtungskomponenten in entgegengesetzter Umfangsrichtung haben.

Die Beispiele Nr. 4 und Nr. 5 zeigen Anströmböden, deren Sektoren derart aus schräg gelochten Blechen ausgeschnitten sind, daß die mittlere horizontale Strömungskomponente radial zur Drehachse des Schleuderrades hin bzw. von diesem weg radial nach außen zeigt. Bei dem Beispiel Nr. 6 schließlich ist der Anströmboden statt in vier in sechs Sektoren eingeteilt. Die horizontalen Richtungskomponenten der schräg angeordneten Löcher weisen wie bei dem Beispiel Nr. 3 in entgegengesetzte Umfangsrichtungen. Selbstverständlich könnte abweichend von den dargestellten Beispielen eine andere Zahl von Sektoren oder eine andere Einteilung der Fläche des Anströmbodens in Felder mit unterschiedlichen horizontalen Richtungskomponenten gewählt werden. In allen Fällen besteht dabei der Vorteil darin, daß die horizontale Strömungskomponente am Anströmboden dort Anhaftungen verhindert, und daß die gegenseitige Lage der verschiedenen horizontalen Strömungskomponenten der einzelnen Felder bzw. Sektoren die Rotation des Gasstroms und des durch diesen von unten nach oben mitgeführten, zu trocknenden Guts im Flugschichttrockner beeinflußt werden kann, um insbesondere dem unterschiedlichen Gewicht der zu trocknenden Güter Rechnung zu tragen und im Zusammenhang mit der Einstellung der Luftmenge die Verweilzeit im Trockner zu bestimmen.

## Ansprüche

1. Flugschichttrockner mit Schleuderrad und einem gelochten Anströmboden zur Trocknung von klebrigen, wärmeempfindlichen Produkten, **dadurch gekennzeichnet**, daß der Anströmboden in wenigstens zwei Felder unterteilt ist, deren Lochungen dem aufwärts strömenden Trocknungsgas unterschiedliche horizontale Richtungskomponenten geben.

2. Flugschichttrockner nach Anspruch 1 **.dadurch gekennzeichnet,** daß die Felder sektorförmig ausgebildet sind.

3. Flugschichttrockner nach Anspruch 1 oder 2 **,dadurch gekennzeichnet,** daß die horizontalen Richtungskomponenten der Lochungen wenigstens eines Teils der Felder tangential zur Achse des Schleuderrades verlaufen.

4. Flugschichttrockner nach Anspruch 3 **.dadurch gekennziechnet**, daß bei zwei Strömungen mit entgegengesetzter Umfangsrichtung die Abströmöffnung des Flugschichttrockners über derjenigen Stelle angeordnet ist, wo sich das Trockengut konzentriert.

5. Flugschichttrockner nach einem der Ansprüche 1 bis 4, **dadurch gekennzeichnet**, daß die mittleren horizontalen Richtungskomponenten der Lochungen wenigstens eines Teils der Felder mit Bezug auf die Achse des Schleuderrades radial einwärts oder auswärts weisen.

| NR. | Anströmrichtung |
|-----|-----------------|
| 1 | |
| 2 | umge-dreht |
| 3 | |
| 4 | |
| 5 | |
| 6 | |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 401 465 (LARWILL) <br> * Insgesamt * | 1,2,3 | F 26 B 17/10 <br> B 01 J 8/44 |
| Y | LU-A- 81 449 (MANOX CHEMIE) <br> * Insgesamt * | 1,2,3 | |
| A | GB-A-1 187 567 (THE GAS COUNCIL) <br> * Insgesamt * | 1,2,3 | |
| A | GB-A-2 121 153 (SIE SOCIETA' ITALIANA ESSICCATOI SpA) <br> * Insgesamt * | 1,3 | |
| A | GB-A-1 190 287 (K.K. OKAWARA SEISAKUSHO) <br> * Insgesamt * | 1,3 | |
| A | FR-A-2 261 050 (USM CORPORATION) <br> * Figuren 2,4,5 * | 5 | RECHERCHIERTE SACHGEBIETE (Int. Cl.4) <br> F 26 B <br> B 01 J |
| A | US-A-3 817 696 (HERETH) <br> * Insgesamt * | 5 | |
| A | FR-A-1 308 721 (FORGES DE STRASBOURG) | | |

--- -/-

Der vorliegende Recherchenbericht wurde für alle Patentansprüche erstellt.

| Recherchenort | Abschlußdatum der Recherche | Prüfer |
|---|---|---|
| DEN HAAG | 30-06-1987 | SILVIS H. |

Europäisches
Patentamt

**EUROPÄISCHER RECHERCHENBERICHT**

Nummer der Anmeldung

EP    87 10 5104

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 904 121  (VEB SCHWERMASCHINENBAU KOMBINAT ERNST THÄLMANN MAGDEBURG) | | |
| | --- | | |
| A | FR-A-2 328 525  (KELLER PEUKERT GmbH) | | |
| | --- | | |
| A | FR-A-2 095 614  (MORINAGA NYUGYO K.K.) | | |
| | --- | | |
| A | EP-A-0 125 516  (OKAWARA MFG. CO. LTD) | | |
| | ----- | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 30-06-1987 | SILVIS H. |